# EUROPÄISCHE PATENTANMELDUNG

(11) **EP 3 484 023 A1**
(43) Veröffentlichungstag der Anmeldung: **15.05.2019**
(21) Anmeldenummer: 18208949.0
(22) Anmeldetag: 09.11.2016
(51) Int. Cl.: H02K 5/22, H01R 9/24, H01R 24/20, H01R 27/02, H02K 11/33, G05B 19/418, H01R 107/00

(54) **HYBRIDBRÜCKE MIT EINEM HYBRIDKABEL UND ANTRIEBSSYSTEM MIT EINER HYBRIDBRÜCKE**

(30) Priorität: 20.11.2015 DE 102015222982
(62) Teilanmeldung aus: 16198014.9
(71) Anmelder: Baumüller Nürnberg GmbH, 90482 Nürnberg (DE)
(72) Erfinder: BORMUTH, Bernd, 90482 Nürnberg (DE); SCHRÖDEL, Georg, 90459 Nürnberg (DE)
(74) Vertreter: FDST Patentanwälte

(57) **Zusammenfassung**

Die Erfindung betrifft ein Antriebssystem mit einer Anzahl von elektromotorischen Antrieben (1), insbesondere Servoantrieben, die oder deren Elektronik über eine Hybridbrücke (2) mit einem Hybridkabel (33) und mit einem kabelendseitigen Anschlussstecker (12) zur Stromführung und Datenübertragung miteinander verbunden oder verbindbar sind, sowie einen solchen Antrieb (1) und eine solche Hybridbrücke (2).

## Beschreibung

Die Erfindung betrifft ein Antriebssystem mit einer Anzahl von elektromotorischen Antrieben, insbesondere Servoantrieben, und mit mindestens einem Hybridkabel zur strom- und datentechnischen Verbindung benachbarter Antriebe. Sie betrifft weiter einen solchen Antrieb und eine Hybridkabelbrücke (Hybridsteckersystem, Hybridstecker) mit einem Hybridkabel und mit kabelendseitig einem oder jeweils einem Anschlussstecker.

Aus der DE 20 2013 105 359 U1 ist ein Steuerungssystem für Servoantriebe mit einer Steuereinheit bekannt, mit welcher mindestens zwei Antriebe über Hybridkabel in Reihe geschaltet sind, um elektrischen Strom für die Antriebe und eine Datenverbindung zwischen der Steuereinheit und den Antrieben zur Verfügung zu stellen.

Bei dem erfindungsgemäßen Antriebssystem, bei welchem eine Anzahl von elektromotorischen Antrieben (Servoantrieben), d.h. insbesondere deren Leistungs- und Steuerelektronik oder Umrichter über Hybridkabel zur Strom- und Datenübertragung miteinander verbunden oder verbindbar sind, weist der jeweilige Antrieb ein Motorgehäuse zur Aufnahme des Elektromotors, d. h. dessen Motorkomponenten (Stator, Rotor und ggf. Sensor-/Messeinrichtung (Resolver) zur Winkel- und Drehzahlerfassung) und ein, vorzugsweise als Gehäusehalbschale ausgeführtes, Umrichter- oder Elektronikgehäuse zur Aufnahme einer Leiterplatte der Leistungs- und/oder Steuer- bzw. Regelelektronik auf.

Das vorzugsweise als Gehäusehalbschale oder halbschalenartig ausgeführte Umrichter- bzw. Elektronikgehäuse des Antriebs überragt dessen Motorgehäuse stirnseitig, insbesondere an der B-Seite, mit einem Gehäuseabschnitt. In diesem ist ein Leiterplattenabschnitt der Leiterplatte angeordnet. Auf oder an diesem Leiterplattenabschnitt der Antriebs- oder Umrichterelektronik ist ein Gegensteckergehäuse (Steckergehäuse) eines Gegensteckerpaars mit leiterplattenseitig kontaktierten Stromanschlüssen und Daten- und/oder Signalanschlüssen montiert. Dabei sind zur Stromführung vorzugsweise Stromschienen vorgesehen, die in das Gegensteckergehäuse des Gegensteckerpaars integriert sind und eine Durchkontaktierung zwischen den beiden Gegensteckern des Gegensteckerpaars herstellen. Die Gegenstecker sind zur Steckverbindung und Steckkontaktierung mit einem zugeordneten Hybridsteckersystem (Hybridstecker- oder Hybridkabelbrücke) vorgesehen und eingerichtet, d. h. mit dessen jeweiligen Anschlussstecker, der an ein Hybridkabel mit Strom- und Daten- oder Signalleitungen kabelendseitig montiert ist.

Die jeweilige Stromschiene weist einen als Durchkontaktierung wirksamen Schienenabschnitt sowie den Gegensteckern jeweils zugeordnete Anschlusskontakte, vorzugsweise in Form von Steckanschlüssen (Steckzungen), und einen leiterplattenseitigen Anschlusskontakt auf. Die Durchkontaktierung erfolgt somit vorteilhafterweise nicht leiterplattenseitig, also auf der Leiterplatte der Elektronik, sondern vielmehr innerhalb des Gegensteckerpaars bzw. innerhalb dessen Steckergehäuses. Die jeweilige Stromschiene ist oder wirkt dabei quasi als T-Stück, dessen Vertikalende als Leiterplattenkontakt dient, während die Horizontalenden die Steckanschlusskontakte (Steckeranschlüsse) bilden.

Infolge der Integration der oder jeder Stromschiene in das den Gegensteckern des Gegensteckerpaars vorzugsweise gemeinsame und zweckmäßigerweise als Spitzgussteil aus Kunststoff hergestellte Gegensteckergehäuse, in welches die Stromschienen bzw. deren entsprechender Stromschienenabschnitt geeigneterweise eingegossen ist, ragen die Steckanschlüsse zur Kontaktierung mit den korrespondierenden Anschlüssen des zur Herstellung der Steckverbindung zugeordneten Hybridsteckers auf der der Leiterplatte, d. h. der dem Elektronik- oder Umrichter-(Halbschalen)-Gehäuse abgewandten Gehäuseseite (unter Bildung des mit dem Hybridstecker korrespondierenden Steckgesichtes) aus der Kunststoffumspritzung des Gegensteckergehäuses heraus. Dieses, dem Gegensteckerpaar gemeinsame Gegensteckergehäuse ist auf dem Leiterplattenabschnitt der Antriebselektronik (Umrichter mit Leistungs- und Steuerelektronik) angeordneten und montiert, und die steckerseitigen Strom- und Datenanschlüsse sind dort (elektrisch) kontaktiert.

Das Motorgehäuse des jeweiligen Antriebs überragt (flachdachartig) die Geber- oder B-Seite des Elektromotors, so dass dort stirnseitig, also an der entsprechenden Motor- oder Motorgehäuseschmalseite ein Anschlussabschnitt des Motorgehäuses gebildet ist. Dieser Anschlussabschnitt des Motorgehäuses überdeckt den entsprechenden Gehäuseabschnitt mit dem sich in diesen erstreckenden Leiterplattenabschnitt des Umrichter- oder Elektronikgehäuses und ist mit diesem, vorzugsweise gehäusedicht, verbunden, beispielsweise (unter Zwischenlage eines Dichtelementes) verschraubt. Das Umrichter- oder Elektronikgehäuses erstreckt sich auf der entsprechenden Motorseite des Antriebs (Antriebsseite) geeigneterweise entlang des gesamten Motorgehäuses.

Der den Gehäuseabschnitt des Umrichter- oder Elektronikgehäuse überdeckende Anschlussabschnitt des Motorgehäuses weist anschluss- und/oder steckerseitig eine dachartig ausgebildete Steckfläche auf. Mit anderen Worten sind zwei in einem stumpfen Winkel (Neigungswinkel) stehende Steckflächenbereiche mit einander abgeneigten Flächennormalen derart gebildet, dass zwischen den hybridkabelseitigen Steckern (Anschlusssteckern der Hybridbrücke) in der Steckverbindung mit den Gegensteckern dieses Antriebs ein spitzer Winkel (Zwischenspaltwinkel) gebildet ist, wobei die beiden hybridkabelseitigen Anschlussstecker gegeneinander V-förmig verkippt oder geneigt (angeordnet bzw. positioniert) sind.

Der genannte und beschriebene motorseitige Anschlussabschnitt des Motorgehäuses des jeweiligen Antriebs ist anschluss- und steckerseitig im Bereich der dachartig ausgebildeten Steckfläche vom Gegensteckergehäuse (bzw. vom Gegensteckerpaar) derart durchgriffen, dass deren gegeneinander dachartig geneigten Gegenstecker über diesen motorseitigen Anschlussabschnitt zur Steckverbindung mit einzeln oder paarweise steckbaren Hybridsteckern hybridkabelseitigen Anschlusssteckeren) zugänglich sind.

Das nachfolgend auch als Hybridbrücke oder Hybridsteckersystem oder einfach als Hybridstecker bezeichnete umfasst ein Hybridkabel und an zumindest einem Kabelende, vorzugsweise an beiden Kabelenden, einen Anschlussstecker mit in einem Steckergehäuse angeordneten Anschlusskontakten zur Strom- und Datenübertragung auf. Die Hybridbrücke ist insbesondere für ein Antriebssystem oder innerhalb eines Antriebssystems mit einer Anzahl von elektromotorischen Antrieben, insbesondere Servoantrieben, geeignet.

In vorteilhafter Ausgestaltung ist das Hybridkabel als Flachkabel ausgeführt. Das Hybridkabel ist vorteilhafterweise bogenförmig, insbesondere mit zueinander V-förmig oder keilförmig verlaufenden Bogenschenkeln, ausgebildet und/oder in diese Bogenform verbringbar. Die Flachkabelausführung ermöglicht vorteilhafterweise eine besonders enge Anordnung der Antriebe zu- oder nebeneinander, insbesondere auch bei deren Anordnung entlang eines Kreisumfangs oder eines Kreisbogens, auch bei vergleichsweise engen Radien.

Insbesondere bei einer solchen kreis- oder kreisbogenförmigen Antriebsanordnung ist die Kombination mit dachartig angestellten Steckflächen der, vorzugsweise paarweisen, Gegenstecker an oder auf dem antriebsseitigen Motorgehäuseabschnitt ist der Hybridstecker (die Hybridbrücke) mit Flachkabelausführung besonders vorteilhaft, da mit den in einem Neigungswinkel angestellten Steckflächen in der Gesamtheit eine besonders vorteilhafte Anpassung mehrerer kreisförmig angeordneter Antriebe an die Kreisform gegeben ist. Mit anderen Worten können die Antriebe entlang eines Kreisbogens, jedoch auch in einer geraden Reihenanordnung, aufgrund des besonders raumsparenden Aufbaus des Hybridsteckersystems sowie der ggf. geneigten Steckflächen der antriebsseitigen Gegenstecker besonders eng nebeneinander und somit in einem besonders geringen Abstand zueinander positioniert werden.

Des Weiteren ist das Steckergehäuse des oder jedes Anschlusssteckers des Hybridsteckers zusätzlich oder alternativ als vorzugsweise einteiliges Kunststoffgehäuse mit einer Anzahl von Gehäusekammern zur Aufnahme des oder jedes Anschlusskontaktes zur Strom- und/oder Datenübertragung ausgeführt. Das Steckergehäuse ist ferner zusätzlich oder alternativ im Wesentlichen rechteckig, insbesondere mit einem im Wesentlichen rechteckigen Gehäusequerschnitt, ausgeführt.

Zudem kann das Hybridkabel zusätzlich oder alternativ kabelendseitig mit einer zur Abdichtung und/oder als Zugentlastung wirksamen, insbesondere als Kunststoffumspritzung ausgeführten Umspritzung versehen sein, welche sich vorteilhafterweise in das Steckergehäuse hinein erstreckt und/oder dieses zumindest bereichsweise um- und/oder übergreift.

Insbesondere bei einem Antriebssystem, bei dem das Gegensteckerpaar und/- oder deren Gegenstecker zur Steckverbindung mit hybridkabelseitig montierten Hybrid-Anschlusssteckern vorgesehenen und eingerichtet sind, ist die Steckfläche eines der Gegenstecker gegenüber derjenigen des anderen Gegensteckers in einem stumpfen Winkel unter Bildung einer dachartigen (nach Art eines Satteldaches) Gesamtsteckfläche geneigt. Diese dachartige Gesamtsteckfläche ist antriebsseitig und dort an einem Motorgehäuseabschnitt vorgesehen, in welchen ein Leiterplattenabschnitt oder -bereich der Elektronik (Antriebs- oder Umrichterelektronik) des elektromotorischen Antriebs aufgenommen ist, mit welchem Leiterplattenabschnitt das Gegensteckerpaar unter Bereitstellung einer Durchkontaktierung, insbesondere zur Stromführung, kontaktiert ist.

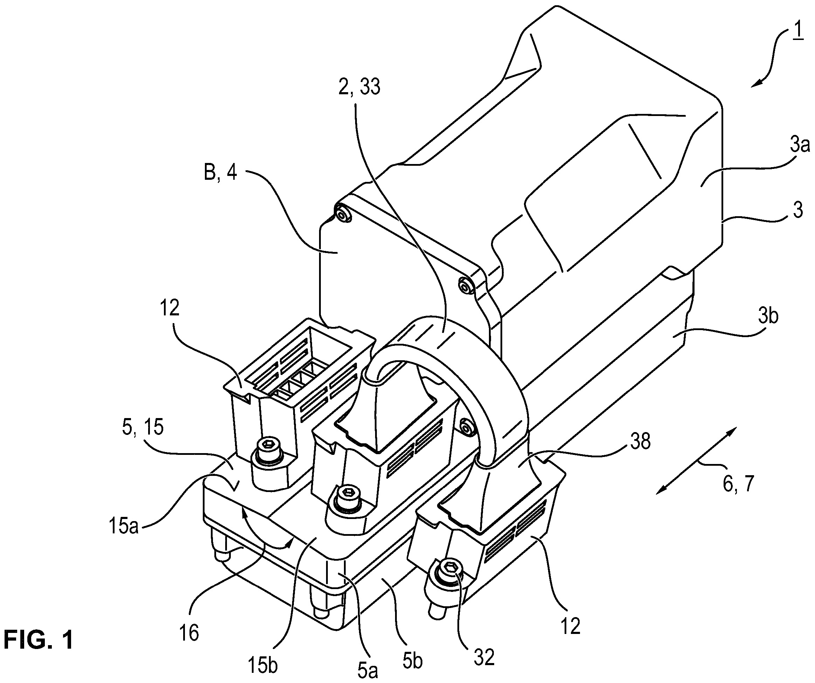

Nachfolgend werden Ausführungsbeispiele der Erfindung anhand einer Zeichnung näher erläutert. Dabei sind in allen Figuren 1 bis 11 gleiche Teile stets mit gleichen Bezugszeichen versehen.

Fig. 1 zeigt einen einzelnen Antrieb 1, der geeigneterweise innerhalb eines Antriebssystems mit mehreren solchen Antrieben 1 über eine nachfolgend als Hybridbrücke 2 bezeichnete Hybridstecker- oder Hybridkabelbrücke stromtechnisch, insbesondere gleichstromtechnisch, und daten- oder signaltechnisch mit einem benachbarten Antrieb 1 und/oder mit einer (übergeordneten) Versorgungs- und/- oder Steuereinheit (Verteiler) gekoppelt ist. Die Stromversorgung des oder jedes Antriebs 1 erfolgt zweckmäßigerweise über einen Gleichstromzwischenkreis (Zwischenkreis), welcher beispielsweise eine 24V-Gleichspannung und einen entsprechenden Gleichstrom für ein antriebsseitiges Leistungsteil (Leistungselektronik) liefert.

Der oder jeder Antrieb 1 ist ein elektromotorischer Antrieb mit einem vorzugsweise bürstenlosen Elektromotor, dessen zweckmäßigerweise statorseitige, insbesondere dreiphasige, Drehstromwicklung vom Leistungsteil (beispielsweise mittels Halbleiterschaltern (IGBT's) in Brückenschaltung) energetisch versorgt (bestromt) wird. In dieser Ausführungsform ist der auf einer Motorwelle wellenfest angeordnete Rotor geeigneterweise mit Permanentmagneten bestückt.

Bei einer besonders geeigneten Ausführung des Antriebs 1 als Servoantrieb umfasst dieser zusätzlich zum (bürstenlosen) Elektromotor und einem das Leistungsteil (Leistungselektronik) umfassenden Umrichter (Servoumrichter) eine Steuerelektronik, die geeigneterweise Regelungs- und Sollwertgenerierungs- sowie Überwachungsfunktionalitäten aufweist. Das Leistungsteil bzw. die Leistungselektronik und die Steuerelektronik werden nachfolgend auch als Antriebselektronik oder einfach als Elektronik bezeichnet. Diese Elektronik umfasst insbesondere eine elektronische Lage-, Geschwindigkeits- und/oder Momentenregelung, wozu der Elektromotor des Antriebs 1 vorzugsweise mit einem Resolver ausgerüstet bzw. dem Elektromotor ein solcher zugeordnet ist.

Der Antrieb 1 umfasst ein Antriebsgehäuse 3, welches vorzugsweise und dabei besonders vorteilhaft lediglich aus einem Motorgehäuse 3a und einem vorzugsweise halbschalenartigen Elektronikgehäuse 3b zusammengesetzt oder aufgebaut ist. In das Motorgehäuse 3a sind die Komponenten des Elektromotors, gegebenenfalls inkl. Resolver, und vorzugsweise inkl. Wellenlager, integriert bzw. darin angeordnet. Das Antriebsgehäuse 3 weist einen sich über eine Motorstirnseite (Stirnseite) B, vorzugsweise einen B-seitigen Lagerschild, Lager- oder Motordeckel oder Lager- oder Motorflansch 4 des Elektromotors, hinaus erstreckenden, insbesondere stufen- oder podestartig abgesetzten oder eingezogenen Gehäuseabschnitt oder -bereich 5 auf. Das Motorgehäuse 3a weist hierzu einen Anschlussabschnitts 5a auf und erstreckt sich geeigneterweise über eine (bodenseitige) Antriebslängsseite 6 des Antriebs 1. Mit dieser Antriebslängsseite 6 korrespondiert eine Gehäuselängsseite 7 des Elektronikgehäuses 3b. Das Elektronikgehäuse 3b verschließt somit im Montagezustand die Antriebslängsseite 6 des Motorgehäuses 3a inkl. dessen Anschlussabschnitt 5a.

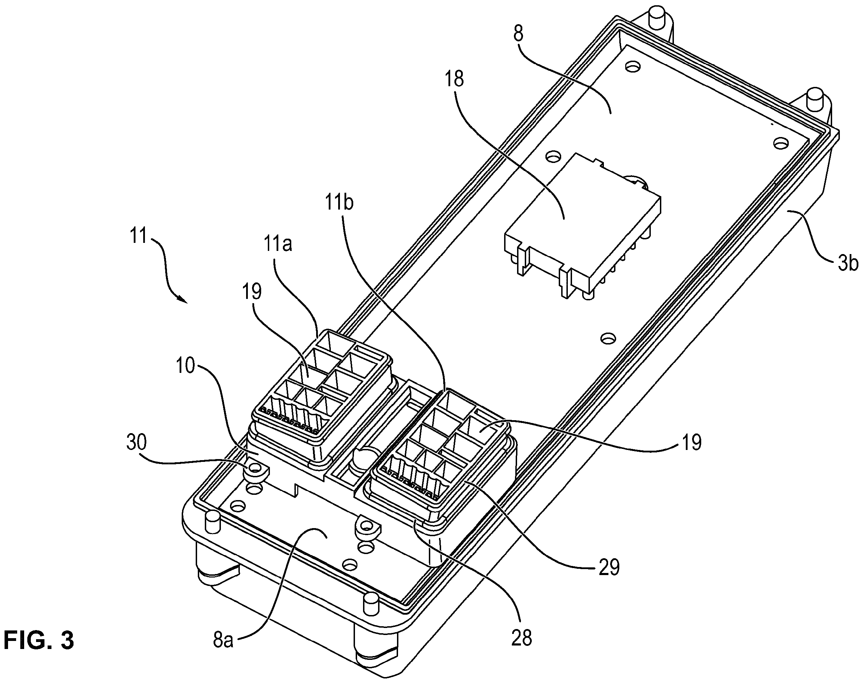

Wie in Verbindung mit Fig. 3 erkennbar ist, ist innerhalb des Elektronikgehäuses 3b eine Leiterplatte 8 der Elektronik angeordnet oder aufgenommen, welche Leiterplatte 8 einen Leiterplattenabschnitt 8a aufweist. Mit diesem Leiterplattenabschnitt 8a erstreckt sich die Leiterplatte 8 in den Antriebsgehäuseabschnitt 5. Dieser ist gebildet aus dem Anschlussabschnitt bzw. Anschlussbereich 5a des Motorgehäuses 3a und einem korrespondierenden Gehäuseabschnitt 5b des Elektronikgehäuses 3b.

Wie wiederum in Fig. 3 erkennbar ist, ist der Leiterplattenabschnitt 8a der Leiterplatte 8 der Elektronik zur Montage eines Gegensteckergehäuses 10 eines Gegensteckerpaares 11 mit zwei Gegensteckern 11a und 11b sowie zur Kontaktierung deren Stecker- und/oder Anschlusselemente vorgesehen und eingerichtet. Diese Gegenstecker 11a, 11b korrespondieren mit Anschlusssteckern 12 einer jeweiligen Hybridbrücke 2 oder mit einem vorzugsweise gleichartigen Anschlussstecker 12 eines in Fig. 1 nicht dargestellten Hybridkabels zum Anschluss an die übergeordnete Steuereinheit. In Fig. 1 ist der der übergeordneten Steuereinheit zugeordnete Anschlussstecker 12 ohne Hybridkabel dargestellt.

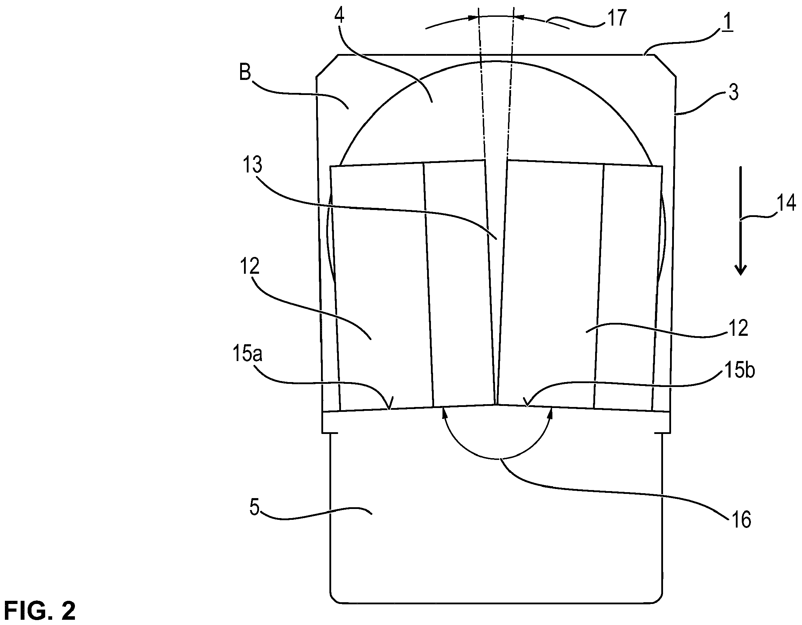

Fig. 2 zeigt den Antrieb 1 in stirnseitiger Ansicht mit Blick auf dessen (B-seitigen) Antriebsgehäuseabschnitt 5 und dessen motorgehäuseseitigen Anschlussabschnitt 5a mit gesteckten Anschlusssteckern 12 von ein oder zwei Hybridbrücken 2 oder einer Hybridbrücke 2 und einem zur übergeordneten Steuereinheit führenden Hybridkabel inkl. Anschlussstecker 12. Erkennbar ist, dass die beiden Anschlussstecker 12 unter Bildung eines V-förmigen Zwischenspalts 13 gegenüber einer (vertikalen) Steckrichtung 14 schräggestellt positioniert sind. Diese Schrägstellung der Anschlussstecker 12 wird bewirkt durch eine satteldachartige Gesamtsteckfläche 15 des Anschlussabschnitts 5a mit zwei Steckflächen 15a und 15b für den jeweiligen Anschlussstecker 12, so dass die Flächennormalen der Steckflächen 15a und 15b einander abgeneigt sind und somit (zueinander) ebenfalls V-förmig verlaufen. Der Steckflächenwinkel 16 zwischen den beiden Steckflächen 15a und 15b beträgt beispielsweise 170°, so dass der Zwischenspaltwinkel 17 zwischen den gesteckten Anschlusssteckern 12 entsprechend 10° beträgt.

Dieser Steckflächen- und Zwischenspaltwinkel 16 bzw. 17 ist besonders vorteilhaft an einen gewünschten, bestimmten oder gewählten Radius eines Anordnungskreises oder -kreisbogenabschnitts angepasst, auf oder entlang welchem mehrere Antriebe 1 (azimutal nebeneinander) angeordnet bzw. positioniert sind. Je nach diesem Kreisradius der Antriebsanordnung innerhalb eines Antriebssystems kann somit der Steckflächenwinkel 16, d. h. der Steckflächenneigungswinkel gegenüber der Vertikalen und/oder Steckrichtung 14 größer oder kleiner als 170° gewählt oder bemessen werden. Zweckmäßigerweise korrespondieren die Neigungswinkel der die Gegenstecker 12 bildenden Gehäuseabschnitte des Gegensteckergehäuses 10 mit dem Steckflächenwinkel 16, sind also - bezogen auf die Darstellung des Antriebs 1 in Fig. 2 - ebenfalls um jeweils 5° aus der Horizontalen nach außen abfallend geneigt ausgebildet.

Der Winkel 17 des V-förmigen Zwischenspalts 13 zwischen den angeschlossenen und/oder montierten Anschlusssteckern 12 beträgt somit im Ausführungsbeispiel 10°, wobei jeder der Anschlussstecker 12 gegenüber der vertikalen Steckrichtung 14 und insbesondere gegenüber einer hierzu parallelen Anordnung/Ausrichtung der Anschlussstecker 12 um jeweils 5° (in der Darstellung gemäß Fig. 2 nach links bzw. rechts) geneigt oder schräggestellt ist.

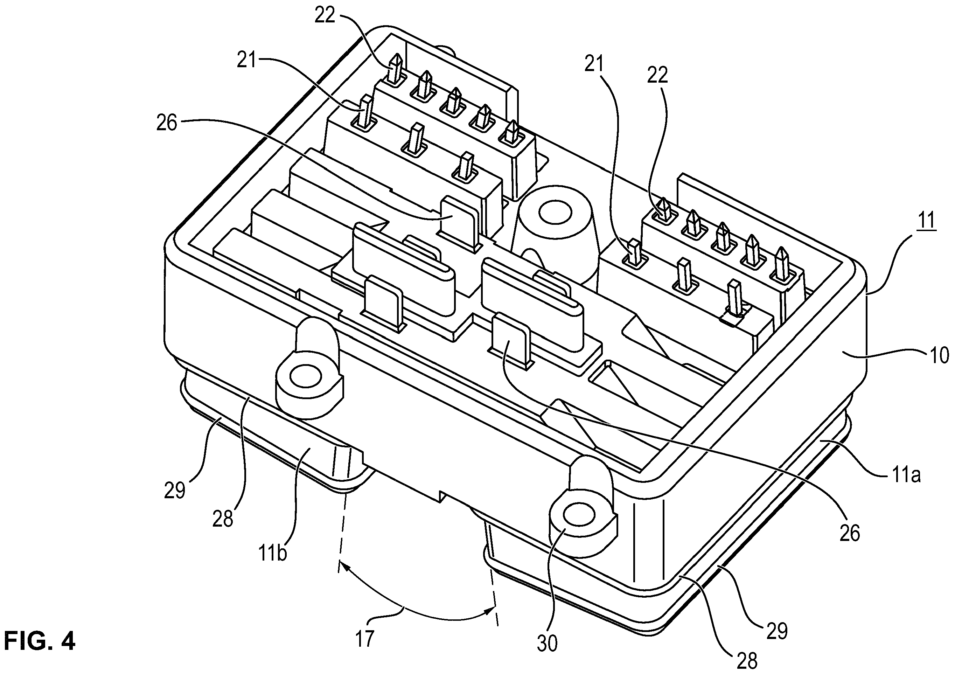

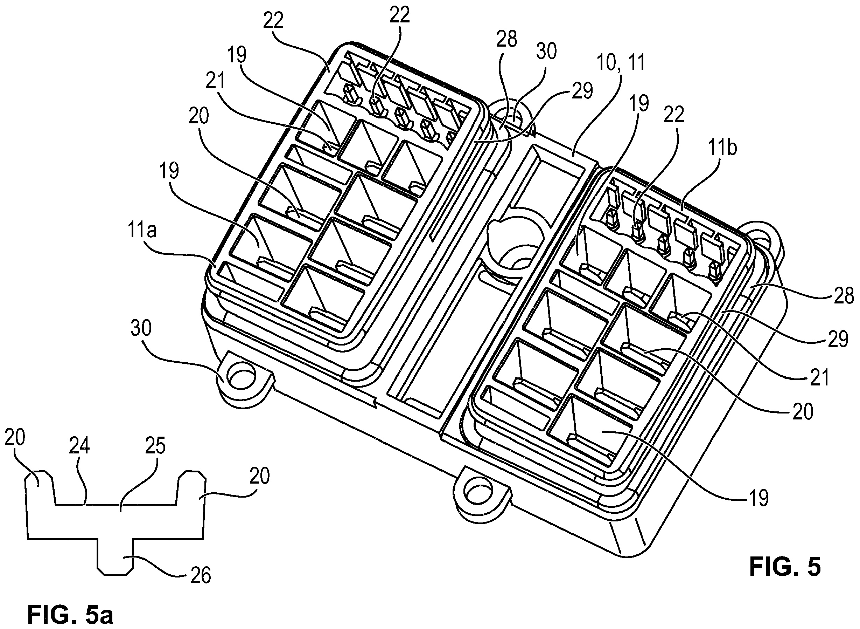

Die Fig. 4 und 5 zeigen das Gegensteckerpaar 11 mit dem Gegensteckergehäuse 10 von der der Leiterplatte 8 bzw. dem Leiterplattenabschnitt 8a zugewandten Gehäuserückseite (Montageseite) bzw. von der den Anschlusssteckern 12 zugewandten Anschlussseite mit dem gezeigten Steckgesicht. Wie in Verbindung mit Fig. 3, in welcher auch das Leistungsteil 18 der Motor- oder Antriebselektronik dargestellt oder zumindest angedeutet ist, weist das Gegensteckergehäuse 10 eine Anzahl von Gehäusekammern 19 auf. In diesen sind die Gegensteckkontakte der Gegenstecker 11a, 11b angeordnet. Hierbei handelt es sich um Gehäusekammern 19 für stromführende Anschlüsse 20, vorzugsweise in Form von Steckzungen. Weitere Anschlüsse 21 in entsprechenden Gehäusekammern 19 dienen als Reserveanschlüsse. Eine oder mehrere weitere Gehäusekammern 19 dienen zur Aufnahme von Datenübertragungsanschlüssen 22.

Die nachfolgend auch als Stromanschlüsse bezeichneten stromführenden Anschlüsse 20 sind Bestandteil von in Fig. 5a beispielhaft dargestellten Stromschienen 24. Die Stromschiene 24 weist einen als Durchkontaktierung zwischen den beiden Gegensteckern 11a und 11b dienenden (wirksamen) Stromschienenabschnitt 25 auf. Die Stromschiene 24 ist prinzipiell als T-Stück ausgeführt, dessen horizontaler Schenkel den Stromschienenabschnitt 25 mit den endseitigen Stromanschlüssen 20 bildet. Diese sind, vorzugsweise entsprechend dem Zwischenspaltwinkel 17, V-förmig ausgestellt. Zwischen diesen beiden Stromanschlüssen 20 ist auf der gegenüberliegenden Seite des Stromschienenabschnitts 25 ein Leiterplattenanschluss 26 vorgesehen, der quasi den vertikalen T-Schenkel der Stromschiene 24 bildet. Der jeweilige Leiterplattenanschluss 26 der jeweiligen Stromschiene 24 ist in Fig. 4 erkennbar und ragt auf der dort gezeigten Unter- oder Rückseite des Gegensteckergehäuses 10 heraus.

Die Stromschienen (Kontaktschienen) 24 sowie vorzugsweise oder gegebenenfalls die weiteren Anschlüsse, d. h. die Datenübertragungsanschlüsse 21 sowie die Reserveanschlüsse 22 ragen gehäuserückseitig des Gegensteckergehäuses 10 ebenfalls heraus. Die Stromschienen 24 sind in das geeigneterweise aus Kunststoff bestehende Gegensteckergehäuse 10 eingegossen bzw. vom entsprechenden Kunststoffmaterial derart umspritzt, dass die stromführenden Anschlüsse 20 innerhalb der Gehäusekammern 19 und auf der Gehäuserückseite des Gegensteckergehäuses (Steckergehäuse) 10 aus dem Kunststoffmaterial und somit herausragen. Dies gilt gegebenenfalls auch für die weiteren Anschlüsse 21, 22 der Gegenstecker 11a, 11b.

Aus den Fig. 3 bis 5 ist zudem erkennbar, dass das Gegensteckergehäuse 10 im Bereich deren Gegenstecker 10a und 10b mit axialen und radialen Dichtelementen als Axialdichtungen 28 und Radialdichtungen 29 der Gegenstecker 11a und 11b versehen sind. Hierzu ist das Gegensteckergehäuse 10 geeigneterweise im Zwei-Komponenten-Kunststoff (2K-Kunststoff) mit geeignet flexiblem oder elastischem Kunststoffmaterial der Axial- und Radialdichtungen 28 bzw. 29 im Kunststoffspritzverfahren hergestellt.

Aus den Fig. 3 bis 5 ist des Weiteren erkennbar, dass das Gegensteckergehäuse 10 eine Anzahl von, vorzugsweise zwei Schraub- oder Gewindelaschen 30 aufweist, welcher mit korrespondierenden Schraublaschen 31 der Anschlussstecker 12 zur Aufnahme von Schrauben 32 für eine Schraubbefestigung der Anschlussstecker 12 am Gegensteckergehäuse 10 korrespondieren, so dass deren Laschenöffnungen zur Aufnahme der jeweiligen Schraube 32 miteinander fluchten.

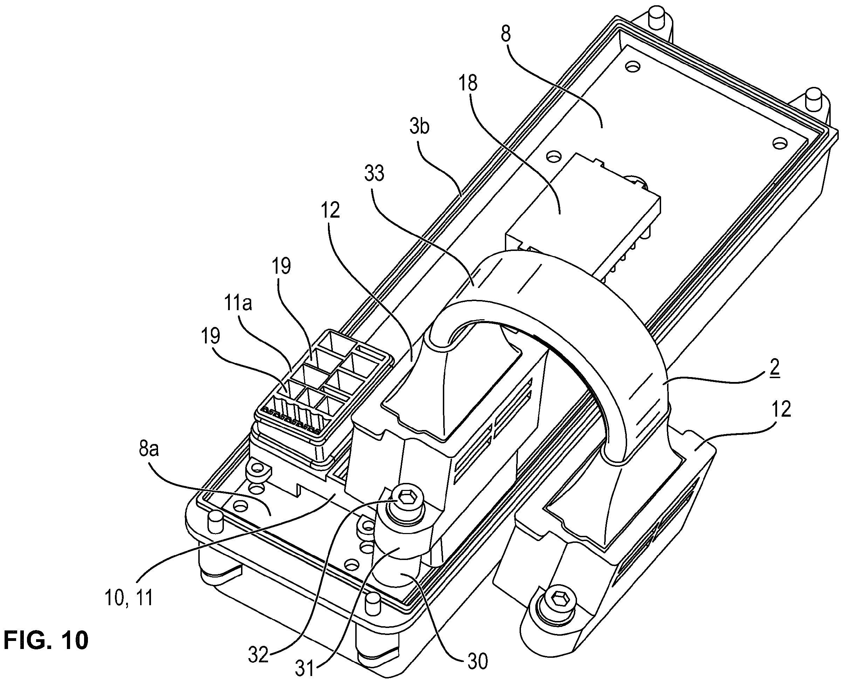

Die Schraubbefestigung der Steckkontaktierung oder Steckverbindung zwischen den Anschlusssteckern 12 und dem Gegensteckerpaar 11 bzw. dessen Gegensteckern 11a, 11b ist in Fig. 1 ersichtlich und insbesondere in Fig. 10 veranschaulicht, welche das Antriebssystem 1 ohne Motorgehäuse 3a und ohne Elektromotor inkl. Motorkomponenten und lediglich das halbschalenförmige Elektronikgehäuse 3b mit einliegender Leiterplatte 8 inkl. Gegensteckerpaar 11 bzw. Gegensteckergehäuse 10 zeigt.

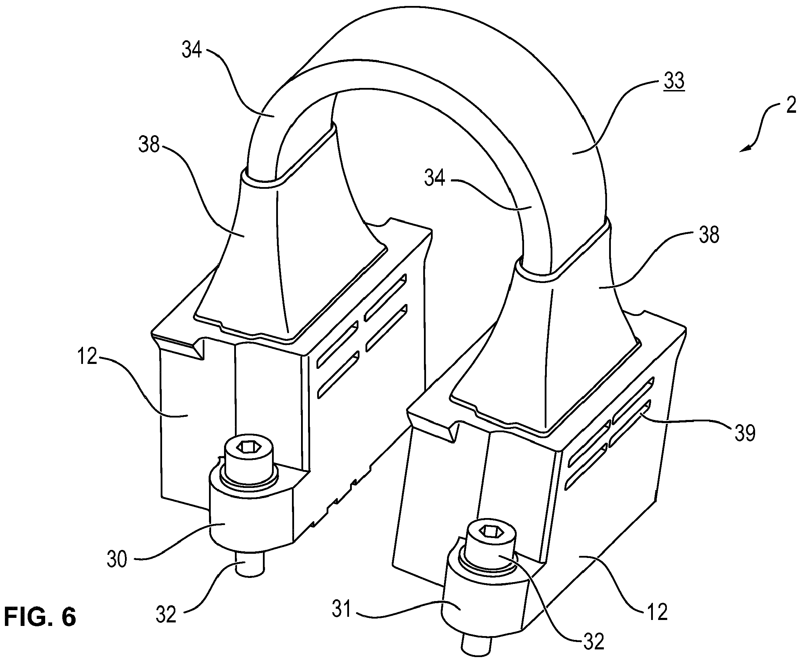

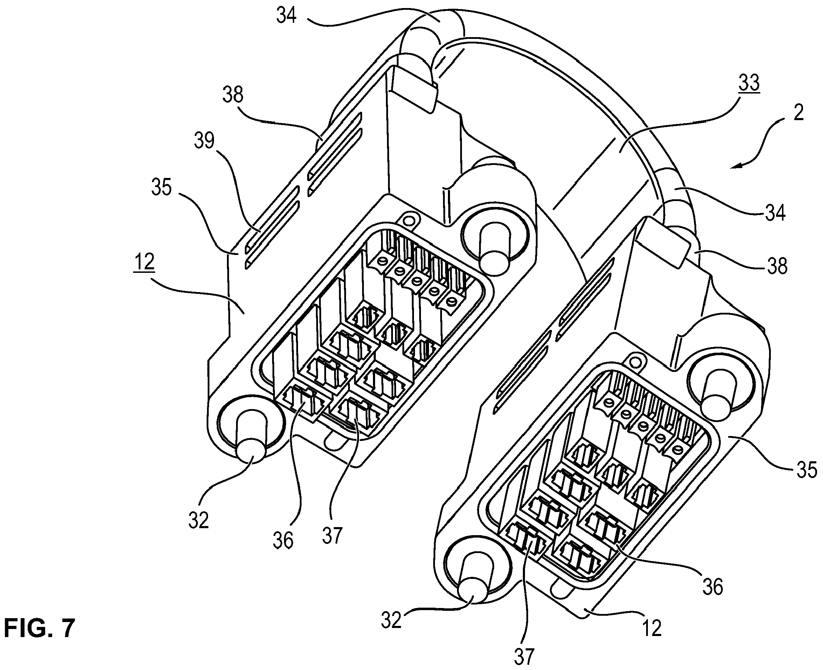

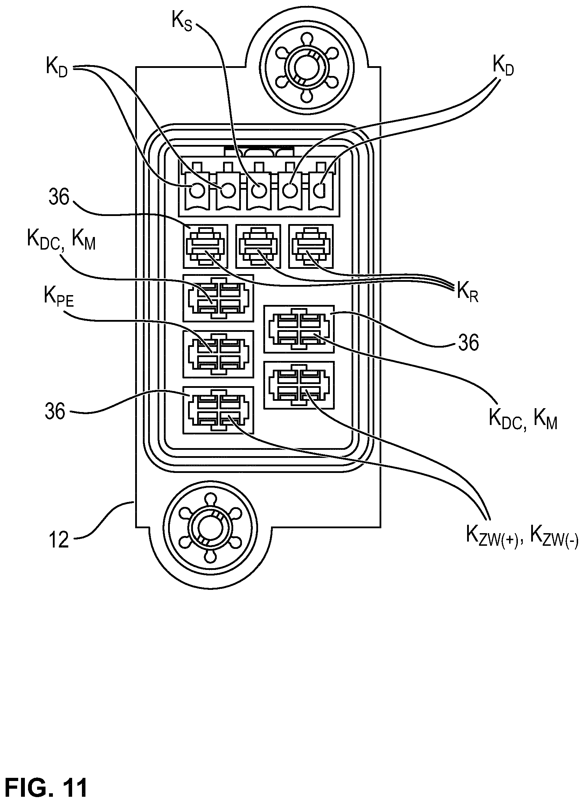

Die Fig. 6 und 7 zeigen die Hybridbrücke 2 in unterschiedlichen perspektivischen Darstellungen. Dabei ist in Fig. 7 eine Darstellung mit Blick auf das Steckergesicht des jeweiligen Anschlusssteckers 12 dargestellt. Fig. 11 zeigt eine Draufsicht auf das Steckergesicht des Anschlusssteckers 12 mit vorzugsweise folgender Steckerbelegung. Mit K_{DC} ist der (positive) 24V-Gleichspannungsanschluss zur Bestromung der Motorwicklung des Elektromotors und mit K_{M} der entsprechende Masseanschluss bezeichnet. Mit K_{ZW(+)} und K_{ZW(-)} sind der positive und negative Zwischenkreisanschluss bezeichnet. Mit K_{PE} ist der Schutzleiter (Protective Earth) bezeichnet. Innerhalb der Kontakt- oder Anschlussleiste für die Datenübertragung mit den Übertragungskontakten K_{D} ist in Fig. 11 mit K_{S} ein Schirmanschluss (Abschirmung) bezeichnet. Die Reservekontakte sind mit K_{R} bezeichnet.

Die genannten K-Anschlüsse sind in der Steckverbindung mit den Anschlüssen 20, 21, 22 des jeweiligen Gegenstecker 11a, 11b elektrisch verbunden. Über die Hybridbrücke 2 erfolgt dann die elektrische Verbindung zum Gegenstecker 11a, 11b eines benachbarten Antriebs 1. Dabei erfolgt lediglich über die Stromschienen 24 eine Durchkontaktierung (elektrische Verbindung) zu den Stromanschlüssen 20 des anderen Gegensteckers 11b, 11a und über diesen sowie über die Hybridbrücke 2 die elektrische Verbindung mit dem benachbarten Antrieb 1. Die derart verbundenen Antriebe 1 sind daher bezüglich der Stromführung parallel geschaltet.

Vorzugsweise werden analog auch die Daten und Signale über die Gegensteckerpaare 11 der Antriebe 1 durchkontaktiert und über die Hybridbrücke 2 von einem Antrieb 1 zum nächstfolgenden Antrieb 1 durchgeschleift. Hierzu sind dann auch die entsprechenden Anschlüsse 21 und 22 zur Durchkontaktierung zwischen den Gegensteckern 11a, 11b, vorzugsweise wiederum T-schienenartig, ausgebildet.

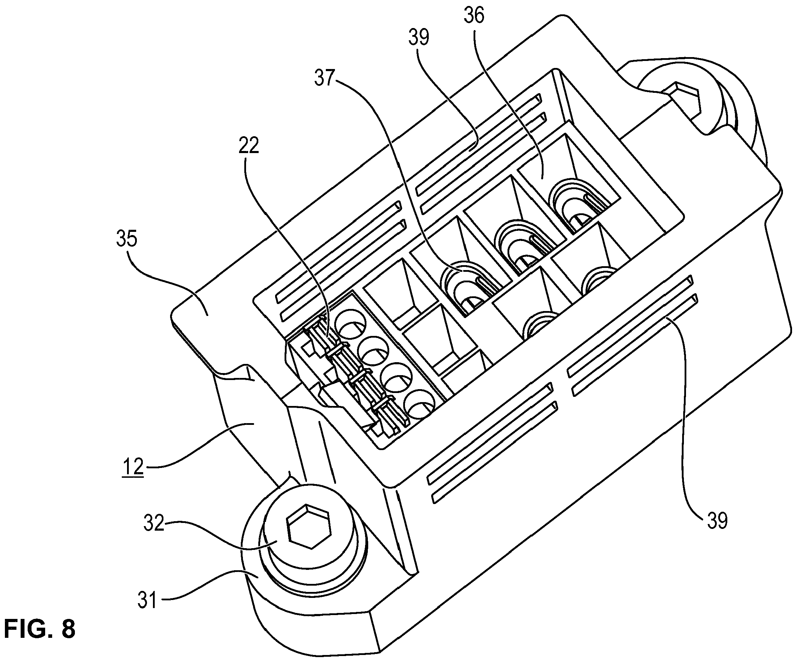

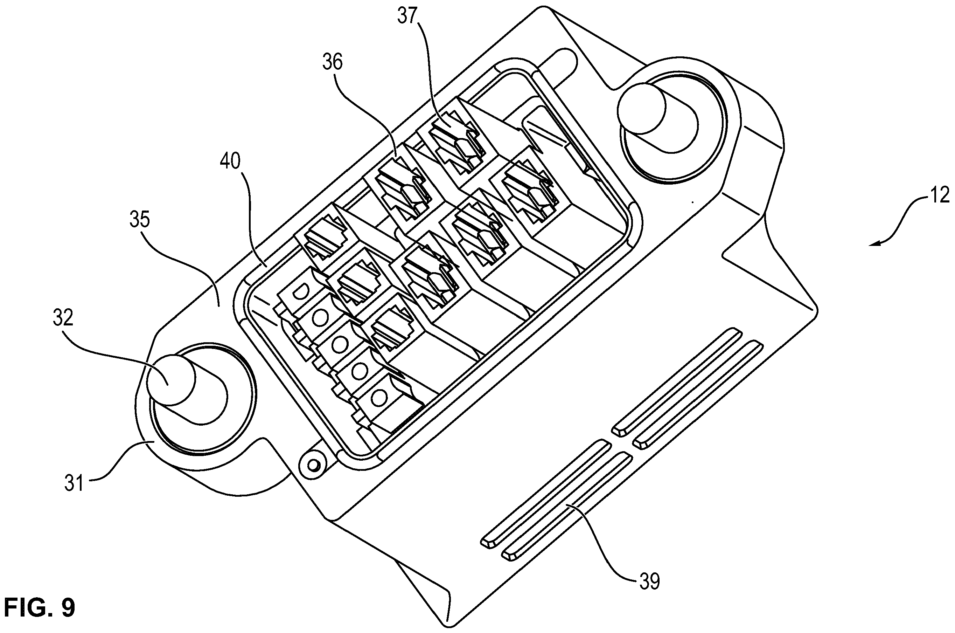

Die Fig. 8 und 9 zeigen jeweils den Anschlussstecker 12 mit Blick auf dessen kabelseitige Anschlussseite (Fig. 8) bzw. mit Blick auf das mit den Gegensteckern 11a, 11b korrespondierende Steckergesicht mit der Steckerbelegung gemäß Fig. 7.

Die Hybridbrücke (der Hybridstecker) 2 umfasst im Ausführungsbeispiel zwei Anschlussstecker 12 und ein Hybridkabel 33, das als Flachkabel ausgeführt ist. Das Hybrid-Flachkabel 33 weist einen Kabelmantel auf, der in nicht näher dargestellter Art und Weise eine Anzahl von Strom- und Datenübertragungsleitungen ummantelt. Die Anschlussstecker 12 sind kabelendseitig montiert, wobei im Ausführungsbeispiel beidendseitig an den Kabelenden jeweils einer der Anschlussstecker 12 vorgesehen ist.

Das Hybrid-Flachkabel 33 verläuft zwischen den beiden Anschlusssteckern 12 bogenförmig. Diese Bogenform des Hybrid-Flachkabels 33 ist geeigneterweise vorgeprägt. Dies bedeutet, dass die Hybridbrücke 2 in der dargestellten Form mit der entsprechenden Bogenform des Hybrid-Flachkabels 33 bereitgestellt ist. Die Bogenschenkel 34 der Hybridbrücke 2 bzw. dessen U- oder hufeisenförmig gebogenes Hybrid-Flachkabels 33 können zueinander parallel oder bereits unter Herstellung des V-förmigen Zwischenspaltwinkels einander zugeneigt sein.

Die Hybridbrücke 2 ist somit besonders raumsparend und ermöglicht eine besonders enge und entsprechend raumsparende Anordnung der Antriebe 1 des Antriebssystems mit entsprechend kleinen oder geringen Abständen zwischen benachbarten Antrieben 1. Die Ausführung des Hybridkabels 33 als Flachkabel ermöglicht vorteilhaft dessen Biegung mit einem, insbesondere im Vergleich zu einem als Rundkabel ausgeführten Hybridkabel, besonders geringen Biegeradius.

Die Anschlussstecker 12 weisen ein vorzugsweise rechteckförmiges Steckergehäuse 35 auf, das zweckmäßigerweise als Kunststoffspritzteil ausgeführt ist. Geeigneterweise weist das Steckergehäuse 35 eine Anzahl von Kontaktkammern oder Gehäusekammern 36 auf, welche die Steckerkontakte 37, d. h. die K-Anschlüsse (Fig. 11) der Anschlussstecker 12 aufnehmen. Diese Gehäusekammern 36 sind vorzugsweise domartig als Kammerdome ausgeführt, deren Außenabmessungen derart an die Innenabmessungen der Gehäusekammern 19 der Gegenstecker 11a, 11b angepasst sind, dass diese Gehäusekammern 19 die korrespondierenden Gehäusekammern 36 der Anschlussstecker 12 im Steckverbund (in der Steckverbindung) aufnehmen.

Die Steckerkontakte 37 zumindest für (die) stromführenden Anschlüsse sind geeigneterweise als zweischenkelige Federkontakte ausgeführt, wie dies insbesondere in Fig. 9 erkennbar ist. Wie aus Fig. 8 erkennbar ist, sind gegenüberliegend, also steckerrück- oder anschlussseitig die Steckerkontakte 37 mit Crimpfahnen als Crimpanschlüsse ausgeführt. Über diese Crimpfahnen werden die Leitungsenden der Leiteradern des Hybrid-Flachkabels 33 (kraftschlüssig) crimpkontaktiert.

In der Steckverbindung der Anschlussstecker 12 mit den korrespondierenden Gegensteckern 11a, 11b gleiten deren als Steckzungen ausgebildeten Stromanschlüsse 20 kontaktierend zwischen die Federschenkel der Federanschlussklemmen (Anschlussfederklemmen) des entsprechenden Anschlusssteckers 12.

Im Kabelendbereich ist das Hybrid-Flachkabel 33 mit einer als Abdichtung und Zugentlastung wirksamen, nachfolgend als Dichtmanschette 38 bezeichneten Umspritzung versehen. Diese bzw. das Umspritzungsmaterial erstreckt sich in das Steckergehäuse 35 des jeweiligen Anschlusssteckers 12 hinein. Im Steckergehäuse 35 sind, fenster- oder schlitzartige Aussparungen 39 vorgesehen, in welche das Umspritzungsmaterial eingreift. Vorteilhafterweise übergreift die Manschette bzw. die Umspritzung 38 das Steckergehäuse 35 zumindest bereichsweise und deckt dabei vorzugsweise die gesamte in Fig. 8 gezeigte Gehäuserückseite des Steckergehäuses 35 und somit den Anschlussstecker 12 kabelseitig ab. Das Steckergehäuse 35 des Anschlusssteckers 12 ist vorzugsweise ebenfalls als 2K-Kunststoffteil mit einem als Axialdichtung wirkenden Dichtring 40 ausgeführte.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

So stellen bei einem Antriebssystem mit einer Anzahl von elektromotorischen Antrieben 1 und mindestens einer Hybridbrücke 2 sowie eine solche Hybridbrücke 2, deren Hybridkabel 33 als Flachkabel ausgeführt ist, eigenständige Erfindungen dar. Des Weiteren stellt ein Antrieb 1, insbesondere eines solchen Antriebssystems, mit einem Antriebsgehäuseabschnitt 5, der eine satteldachartige Steckfläche 15 mit entsprechen (nach außen abfallend) geneigten Steckflächen 15a und 15b zum Hybridsteckeranschluss aufweist, eine eigenständige Erfindung dar. Vorteilhafterweise ist dadurch zwischen zwei hybridkabelseitigen Anschlusssteckern 12 in deren Steckverbindung mit einem antriebsseitigen Gegensteckerpaar 11 ein spitzer Winkel 17 gebildet. Zweckmäßigerweise weist ein motorgehäuseseitiger Anschlussabschnitt 5a des Antriebs- bzw. Motorgehäuses 5, 5a die dachartige Gesamtsteckfläche 15 mit den beiden Steckflächen 15a, 15b derart auf, dass deren Flächennormalen zueinander V- oder keilförmig verlaufen.

Ferner stellt ein Antrieb 1 mit einem leiterplattenseitig montierten Gegensteckergehäuse 10 mit darin integrierten Stromschienen 24 zur Durchkontaktierung von Stromanschlüssen 20 und/oder Datenübertragungsanschlüssen 22 zwischen zweie Gegensteckern 11a, 11b, die zur Steckverbindung mit hybridkabelendseitig montierten Anschlusssteckern 12 vorgesehen und eingerichtet sind, eine eigenständige Erfindung dar.

Die Hybridbrücke 2 mit einem bogenförmigem, mit zueinander V-förmig oder keilförmig verlaufenden Bogenschenkeln 34 ausgebildet Hybridkabel 33 und mit kabelendseitig einem oder jeweils einem Anschlussstecker 12 mit in einem Steckergehäuse 35 angeordneten Anschlusskontakten 37 zur Stromführung und/oder Datenübertragung, stellt ebenfalls eine eigenständige Erfindung dar. In vorteilhafter Ausgestaltung ist das Steckergehäuse 35 als insbesondere einteiliges Kunststoffgehäuse mit einer Anzahl von Gehäusekammern 36 zur Aufnahme des oder jedes Anschluss- oder Steckkontaktes 37 ausgeführt. Geeigneterweise ist das Steckergehäuse 35 im Wesentlichen rechteckig, insbesondere mit einem im Wesentlichen Gehäusequerschnitt, ausgeführt.

Zusätzlich oder alternativ ist das Hybridkabel 33 kabelendseitig mit einer zur Abdichtung und/oder als Zugentlastung wirksamen Umspritzung 38 versehen, welche sich vorzugsweise in das Steckergehäuse 35 hinein erstreckt und/oder dieses zumindest bereichsweise um- oder übergreift. Ein Hybridsteckersystem mit einer solchen Hybridbrücke 2 und mit einem solchen Gegensteckerpaar 11, dessen Gegenstecker 11a, 11b vorzugsweise ebenfalls mit Gehäusekammern 19 für elektrischen strom und/oder Daten führenden Anschlüssen 20, 21, 22 ausgeführt sind, stellt ebenfalls eine eigenständige Erfindung dar.

### Bezugszeichenliste

- 1: Antrieb
- 2: Hybridbrücke
- 3: Antriebsgehäuse
- 3a: Motorgehäuse
- 3b: Elektronikgehäuse
- 4: Motorstirnseite / Lagerdeckel
- 5: Anschlussgehäuseabschnitt /-bereich
- 5a: Anschlussabschnitt
- 5b: Gehäuseabschnitt
- 6: Antriebslängsseite
- 7: Gehäuselängsseite
- 8: Leiterplatte
- 8a: Leiterplattenabschnitt
- 10: Gegensteckergehäuse
- 11: Gegensteckerpaar
- 11a: Gegenstecker
- 11b: Gegenstecker
- 12: Anschlussstecker
- 13: Zwischenspalt
- 14: Steckrichtung
- 15: Gesamtsteckfläche
- 15a: Steckfläche
- 15b: Steckfläche
- 16: Steckflächenwinkel
- 17: Zwischenspaltwinkel
- 18: Leistungsteil
- 19: Gehäusekammer
- 20: stromführender Anschluss / Stromanschluss
- 21: Reserveanschluss
- 22: Datenübertragungsanschluss
- 24: Stromschiene
- 25: Stromschienenabschnitt
- 26: Leiterplattenanschluss
- 28: Axialdichtung
- 29: Radialdichtung
- 30: Schraubenlasche
- 31: Schraubenlasche
- 32: Schraube
- 33: Hybrid- / Flachkabel
- 34: Bogenschenkel
- 35: Steckergehäuse
- 36: Gehäusekammer
- 37: Steckerkontakt
- 38: Dichtmanschette / Umspritzung
- 39: Aussparung
- 40: Dichtring / Axialdichtung

- B: Motorstirnseite
- K: Anschlusskontakt

## Patentansprüche

1. Hybridbrücke (2) mit einem Hybridkabel (33) und mit kabelendseitig einem oder jeweils einem Anschlussstecker (12) mit in einem Steckergehäuse (35) angeordneten, aufgenommenen und/oder integrierten Anschlusskontakten (37) zur Stromführung und Datenübertragung, insbesondere innerhalb eines Antriebssystem mit einer Anzahl von elektromotorischen Antrieben (1),
- wobei das Hybridkabel (33) als Flachkabel ausgeführt ist,
- wobei das Hybridkabel (33) bogenförmig ausgebildet oder in diese Bogenform verbringbar ist,
- wobei das Steckergehäuse (35) als Kunststoffgehäuse mit einer Anzahl von, insbesondere domartigen, Gehäusekammern (36) zur Aufnahme des oder jedes Anschluss- oder Steckkontaktes (37) zur Stromführung und/oder Datenübertragung ausgeführt ist,
- wobei das Steckergehäuse (35) im Wesentlichen rechteckig ausgeführt ist, und/oder
- wobei das Hybridkabel (33) kabelendseitig mit einer zur Abdichtung und/- oder als Zugentlastung wirksamen Umspritzung (38) versehen ist, welche sich in das Steckergehäuse (35) hinein erstreckt und dieses zumindest bereichsweise um- und/oder übergreift.

2. Hybridbrücke (2) nach Anspruch 1, wobei das Hybridkabel (33) mit zueinander V-förmig oder keilförmig verlaufenden Bogenschenkeln ausgebildet oder in diese Bogenform verbringbar ist.

3. Hybridbrücke (2) nach Anspruch 1 oder 2, wobei das Steckergehäuse (35) als einteiliges Kunststoffgehäuse ausgeführt ist.

4. Hybridbrücke (2) nach einem der Anspürche 1 bis 3, wobei das Steckergehäuse (35) mit einem im Wesentlichen rechteckigen Gehäusequerschnitt ausgeführt ist.

5. Hybridbrücke (2) nach einem der Anspürche 1 bis 4, wobei das Hybridkabel (33) kabelendseitig mit einer Kunststoffumspritzung versehen ist.

6. Hybridsteckersystem mit einer Hybridbrücke (2) nach einem der Ansprüche 1 bis 5 und mit einem Gegenstecker (11a, 11b), dessen Steckfläche (15a, 15b) gegenüber derjenigen Steckfläche (15b, 15a) des anderen Gegensteckers (11b, 11a) eines antriebsseitigen Gegensteckerpaares (11) in einem stumpfen Winkel (17) geneigt ist.

7. Antriebssystem mit einer Anzahl von elektromotorischen Antrieben (1), insbesondere Servoantrieben, die oder deren Elektronik über eine Hybridbrücke (2) mit einem Hybridkabel (33) und mit einem kabelendseitigen Anschlussstecker (12) zur Stromführung und Datenübertragung miteinander verbunden oder verbindbar sind,
- wobei der oder jeder Antrieb (1) ein Motorgehäuse (3a) zur Aufnahme des Elektromotors und/oder dessen Motorkomponenten und ein Umrichter- oder Elektronikgehäuse (3b) zur Aufnahme einer Leiterplatte (8) einer Leistungs- und/oder Steuerelektronik aufweist,
- wobei das, vorzugsweise als Gehäusehalbschale oder halbschalenartig ausgeführte, Umrichter- und/oder Elektronikgehäuse (3a) des oder jedes Antriebs (1) dessen Motorgehäuse (3a) stirnseitig, insbesondere B-seitig, mit einem Gehäuseabschnitt (5b) überragt, in welchem die Leiterplatte (8) mit einem Leiterplattenabschnitt (8a) einliegt, und/oder
- wobei auf einen das Motorgehäuse (3a) des jeweiligen Antriebs (1) stirnseitig, vorzugsweise an einer Gehäuseschmalseite oder Stirnseite, insbesondere B-seitig, überragenden Leiterplattenabschnitt (8a) der Elektronik ein Gegensteckergehäuse (10) eines Gegensteckerpaars (11) mit leiterplattenseitig kontaktierten Stromanschlüssen (24), insbesondere Stromschienenanschlüssen, oder leiterplattenseitig kontaktierten Daten- und/oder Signalanschlüssen (21, 22) oder leiterplattenseitig kontaktierten Strom- und Daten- bzw. Signalanschlüssen (21, 22) montiert ist.

8. Antriebssystem nach Anspruch 7,
- wobei zumindest zur Stromführung mindestens eine Stromschiene (24), vorzugsweise eine Anzahl von Stromschienen, vorgesehen ist/sind, die oder deren jede in ein oder das Gegensteckergehäuse (10) des oder eines jeweiligen Gegensteckerpaars (11) integriert ist, und/oder die oder deren jede einen als Durchkontaktierung zwischen den beiden Gegensteckern (11a, 11b) des Gegensteckerpaars (11) wirksamen Schienenabschnitt (25) aufweist,
- wobei das Gegensteckerpaar (11) und/oder die Gegenstecker (11a, 11b) des Gegensteckerpaars (11) zur Steckverbindung mit hybridkabelseitig montierten Anschlusssteckern (12) vorgesehenen und eingerichtet sind, und/oder
- wobei ein dem Gegensteckerpaar (11) gemeinsames Gegensteckergehäuse (10) auf einem Leiterplattenabschnitt (8a) der Elektronik angeordneten, montiert und/oder kontaktiert ist.

9. Antriebssystem nach Anspruch 7 oder 8,
- wobei der Antrieb (1) ein Antriebsgehäuse (3) mit einem, insbesondere den Elektromotor stirn- oder B-seitig überragenden, Gehäusebereich (5) mit einer, vorzugsweise dachartigen, Steckfläche (15) für eine Steckverbindung eines hybridkabelseitigen Anschlusssteckers (12) mit einem Gegenstecker (11a, 11b) eines antriebsseitigen Gegensteckerpaares (11) aufweist,
- wobei ein oder der den oder einen Gehäuseabschnitt (5b) des Elektronikgehäuse (3b) überdeckender Anschlussabschnitt (5a) des Motorgehäuses (3a) anschluss- und/oder steckerseitig, insbesondere unter Bildung zweier Steckflächen oder Steckflächenbereiche (15a, 15b) mit einander abgeneigten Flächennormalen, eine dachartig ausgebildete Steckfläche (15), insbesondere mit einem stumpfen Winkel (16), derart aufweist, dass zwischen zwei hybridkabelseitigen Anschlusssteckern (12) in deren Steckverbindung mit dem Gegensteckerpaar (11) ein spitzer Winkel (17) gebildet ist, und/oder
- wobei der motorgehäuseseitige Anschlussabschnitt (5a) anschluss- und/oder steckerseitig, insbesondere innerhalb oder im Bereich der dachartig ausgebildeten Steckfläche (15), vom Gegensteckerpaar (11) durchgriffen und/oder dieses über den motorgehäuseseitigen Anschlussabschnitt (5a) zur Steckverbindung mit einzeln oder paarweise steckbaren hybridkabelseitigen Anschlusssteckern () zugänglich ist.

10. Elektromotorischer Antrieb (1) mit einem ein Motorgehäuse (3a) und ein Elektronikgehäuse (3b) aufweisenden Antriebsgehäuse (3) mit einem stufenartig abgesetzten Gehäuseabschnitt (5), der aus einem den Elektromotor stirnseitig, insbesondere B-seitig, überragenden Anschlussabschnitt (5a) des Motorgehäuses (3a) und einem Gehäuseabschnitt (5b) des Elektronikgehäuses (3b) gebildet ist.

11. Elektromotorischer Antrieb (1) nach Anspruch 10, wobei der motorgehäuseseitige Anschlussabschnitt (5a) eine dachartige Gesamtsteckfläche (15) mit zwei Steckflächen (15a, 15b) aufweist, deren Flächennormalen gegeneinander, insbesondere V-förmig, geneigt sind.
